# EUROPÄISCHE PATENTSCHRIFT

(11) **EP 1 600 657 B1**
(45) Veröffentlichungstag und Bekanntmachung des Hinweises auf die Patenterteilung: **14.06.2006**
(21) Anmeldenummer: 05015494.7
(22) Anmeldetag: 03.09.2003
(51) Int. Cl.: F16F 1/36, F16F 15/08

(54) **Tragarm**
Support arm
Bras de support

(30) Priorität: 04.12.2002 DE 10256580
(43) Veröffentlichungstag der Anmeldung: 30.11.2005
(62) Teilanmeldung aus: 03019960.8
(73) Patentinhaber: Carl Freudenberg KG, 69469 Weinheim (DE)
(72) Erfinder: Simuttis, Arnold, 55545 Bad Kreuznach (DE)

(56) Entgegenhaltungen:
- DE-A- 3 437 784
- DE-C- 3 637 522
- DE-C- 19 617 992
- FR-A- 2 809 996
- GB-A- 228 023
- US-A- 4 549 726
- US-A1- 2002 163 113
- PATENT ABSTRACTS OF JAPAN Bd. 017, Nr. 358 (M-1440), 7. Juli 1993 (1993-07-07) & JP 05 050860 A (SHOWA ALUM CORP;OTHERS: 01), 2. März 1993 (1993-03-02)

## Beschreibung

Die Erfindung betrifft einen Tragarm, umfassend einen ersten Halter, der an einem ersten Maschinenelement festlegbar ist und einen zweiten Halter, der an einem zweiten Maschinenelement festlegbar ist, wobei der erste Halter und der zweite Halter mittels eines Federkörpers aus elastomerem Werkstoff elastisch nachgiebig miteinander verbunden sind, wobei der erste Halter als äußerer und der zweite Halter als innerer Halter ausgebildet sind, wobei der äußere Halter den inneren Halter teilweise umschließt.

### Stand der Technik

Aus der GB 228 023 A ist ein Tragarm bekannt, bei dem ein Zapfen von einem Lager mit radialem Abstand außenumfangsseitig umschlossen ist, wobei in dem durch den Abstand gebildeten Spalt ein Federkörper aus Gummi angeordnet ist. Der Zapfen und das Lager berühren sich an keiner Stelle unmittelbar anliegend, sodass beide Teile durch den Federkörper schwingungsisolierend miteinander verbunden sind. Die einander zugewandten Oberflächen von Zapfen und Lager sowie die Oberflächen des Federkörpers sind jeweils zylindrisch ausgebildet.

Ein weiterer Tragarm ist aus der US-A-4,549,726 bekannt. Der Tragarm kann für die Aufhängung eines Motors oder Getriebes eines Kraftfahrzeugs verwendet werden, ist einstückig ausgebildet und besteht aus einem Faserverbundwerkstoff mit orientierten Fasern. Eine zusätzliche Dämpfungswirkung soll dadurch erzielt werden, dass zwischen einzelnen Faserverbundwerkstoff-Lagen elastische Zwischenschichten angeordnet sind. Die Zwischenschichten können dabei aus einem elastomeren Werkstoff bestehen.

Ein weiterer Tragarm ist aus der DE 36 37 522 C1 bekannt und gelangt zur Abstützung eines Achsgetriebes innerhalb eines Fahrgestells zur Anwendung. Das Achsgetriebe ist zwischen nach innen höckerartig ausgebildeten Wandeinzügen angeordnet und durch von außen in diese einsetzbare Tragarme gehalten. Der Federkörper ist als konische Schubgummifeder ausgebildet.

Ein weiterer Tragarm ist aus der DE 34 37 784 A1 bekannt. Der vorbekannte Tragarm umfasst einen ersten Halter, der an einem ersten Maschinenelement festlegbar ist und einen zweiten Halter, der an einem zweiten Maschinenelement festlegbar ist, wobei der erste Halter und der zweite Halter mittels eines Federkörpers aus elastomerem Werkstoff elastisch nachgiebig miteinander verbunden sind, wobei der erste Halter als äußerer und der zweite Halter als innerer Halter ausgebildet sind und wobei der äußere Halter den inneren Halter teilweise umschließt. Der vorbekannte Tragarm gelangt als Triebwerksaufhängung zur Anwendung, wobei der Triebwerksblock durch Träger aus Kunststoff jeweils unter Zwischenschaltung eines Elastomerteils mit der Karosserie verbunden ist. Das jeweilige Elastomerteil ist Bestandteil eines Dämpfungsblocks und bildet zugleich eine Einheit mit einem Träger. Hierzu ist es mit einem Zapfen des Trägers verbunden. Durch den Dämpfungsblock werden eingeleitete Schwingungen gedämpft.

### Darstellung der Erfindung

Der Erfindung liegt die Aufgabe zugrunde, einen Tragarm der eingangs genannten Art derart weiter zu entwickeln, dass dieser einfach und kostengünstig herstellbar ist und zur Reduzierung akustisch störender Schwingungen beiträgt. Außerdem sollen auf den Tragarm einwirkende Belastungsspitzen besser abgebaut werden können, sodass der Tragarm dadurch eine verbesserte Haltbarkeit aufweist.

Diese Aufgabe wird erfindungsgemäß durch einen Tragarm gemäß Anspruch 1 gelöst. Auf eine vorteilhafte Ausgestaltungen nehmen die auf Anspruch 1 rückbezogenen Ansprüche Bezug.

Zur Lösung der Aufgabe ist ein Tragarm vorgesehen, umfassend einen ersten Halter, der an einem ersten Maschinenelement festlegbar ist und einen zweiten Halter, der an einem zweiten Maschinenelement festlegbar ist, wobei der erste Halter und der zweite Halter mittels eines Federkörpers aus elastomerem Werkstoff elastisch nachgiebig miteinander verbunden sind, wobei der erste Halter als äußerer und der zweite Halter als innerer Halter ausgebildet sind, wobei der äußere Halter den inneren Halter teilweise umschließt, wobei der zweite Halter und der Federkörper eine vormontierbare Einheit bilden, die mittels einer Haltereinrichtung mit dem ersten Halter verbunden ist, wobei der äußere Halter und der innere Halter im Wesentlichen vollständig kongruent gestaltet und ineinander einsteckbar sind, so dass der Tragarm zweischalig ausgebildet ist und wobei der äußere Halter und der innere Halter kegelstumpf- oder pyramidenstumpfförmig ausgebildet sind.

Ein solcher Tragarm kann als Motortragarm zur Anwendung gelangen, wobei in einem solchen Fall beispielsweise der erste Halter mit der Kurbelwand einer Verbrennungskraftmaschine und der zweite Halter mit einem hydraulisch dämpfenden Lager verbunden ist. Durch dieses Lager ist die Verbrennungskraftmaschine mit dem Tragarm verbunden. Der Tragarm bildet ein Verbindungsteil zwischen der Kurbelgehäusewand der Verbrennungskraftmaschine und dem Lager, auf dem die Verbrennungskraftmaschine abgestützt ist. Der erste und der zweite Halter sind durch den Federkörper aus elastomerem Werkstoff schwingungsentkoppelt miteinander verbunden, sodass während der bestimmungsgemäßen Verwendung des Tragarms hochfrequente Schwingungen, die beispielsweise durch den Antrieb des Ventiltriebs oder den Antrieb von Nebenaggregaten entstehen, isoliert werden. Der erfindungsgemäße Tragarm trägt wesentlich zur Reduzierung unerwünschter Geräusche bei. Durch die, im Längsschnitt betrachtet, konische Gestalt zumindest einer Begrenzungswandung des zweiten Halters, ist dessen Montage in den ersten Halter sehr einfach möglich, da sich eine Anlageberührung des auf dem zweiten Halter angeordneten Federkörpers mit seiner Oberfläche am ersten Halter erst in der hier dargestellten Endposition ergibt. Unerwünschter abrasiver Verschleiß des Federkörpers während der Montage wird dadurch sicher verhindert. Durch die Anordnung des zweiten Halters und des Federkörpers innerhalb des ersten Halters sind diese inneren Bestandteile des Tragarms ausgezeichnet vor äußeren Einflüssen geschützt, sodass der Tragarm gleichbleibend gute Gebrauchseigenschaften während der gesamten Gebrauchsdauer aufweist.

Durch die elastische Verbindung der beiden Halter mittels des Federkörpers, weist der Tragarm auch bei Einwirkung hoher mechanischer Belastungen eine gute Haltbarkeit auf. Hohe mechanische Belastungen können beispielsweise dadurch auf den Tragarm einwirken, dass bei Verwendung des Tragarms als Motortragarm Kräfte eines Unfalls auf diesen einwirken. Durch die Verbindung des ersten und des zweiten Halters mittels des Federkörpers werden Belastungsspitzen durch Verformung des Federkörpers deutlich reduziert; die Gefahr eines Bruchs des Tragarms unter hoher mechanischer, beispielsweise stoßartiger Belastung, ist durch die mehrteilige Konstruktion und die Anordnung des Federkörpers zwischen dem ersten und dem zweiten Halter minimiert.

Eine kompakte Bauform des Tragarms stellt sich dann ein, wenn gemäß einer vorteilhaften Ausgestaltung der erste Halter als äußerer und der zweite Halter als innerer Halter ausgebildet ist, wobei der äußere Halter den inneren Halter teilweise umschließt. Zwischen den jeweiligen Befestigungspunkten der Halter, ist der Tragarm zweischalig ausgebildet, unter Zwischenfügung des Federkörpers.

Der zweite Halter und der Federkörper bilden eine vormontierbare Einheit, die mittels einer Halteeinrichtung mit dem ersten Halter verbunden ist. Die Herstellung und Montage des Tragarms ist dadurch insgesamt sehr vereinfacht.

Der elastomere Werkstoff des Federkörpers wird unmittelbar auf den zweiten Halter aufgespritzt, und zwar ohne die Verwendung von Bindemitteln. Wie zuvor bereits ausgeführt, wird durch die ungebundene Zuordnung des Federkörpers zum zweiten Halter Schrumpf des elastomeren Werkstoffs bei dessen Verfestigung und Erkaltung vermieden; der gebrauchsfertige Federkörper weist dadurch keine die Gebrauchsdauer verringernden inneren Schrumpfspannungen auf.

Die Einheit, bestehend aus dem zweiten Halter und dem Federkörper, wird kraft- und/oder formschlüssig mit dem ersten Halter verbunden. Die Verbindung der vormontierten Einheit mit dem ersten Halter kann beispielsweise dadurch erfolgen, dass die Einheit durch die Halteeinrichtung mit dem ersten Halter verbunden wird.

Im Anschluss an die Montage der vormontierten Einheit in den ersten Halter ist der Federkörper bevorzugt unter elastischer Druck-Vorspannung innerhalb seines Einbauraums gehalten.

Während des Betriebs der an dem inneren Halter angeschlossenen Maschine mittels eines elastisch nachgiebigen Lagers, wirkt der innere Halter schwingungstechnisch als Sperrmasse und hat eine andere Phasenlage, während der erste Halter und das starr damit verbundene erste Maschinenelement und das zweite Maschinenelement schwingen.

Durch die unterschiedliche Abstimmung des Federkörpers zwischen dem ersten und dem zweiten Halter und des elastisch nachgiebigen Lagers, das mit dem zweiten Halter verbunden ist, ergibt sich insgesamt eine breitbandige Isolierung akustisch störender, höherfrequenter Schwingungen.

Bevorzugt ist der Federkörper als Gummistrumpf ausgebildet und ungebunden zwischen dem ersten und dem zweiten Halter angeordnet. Der Federkörper kann beispielsweise aus Silikonkautschuk oder einem Elastomerschaum bestehen, wobei die Dicke des Federkörpers bevorzugt 1 bis 8, weiter bevorzugt 3 bis 6 mm beträgt.

Durch die ungebundene Anordnung des Federkörpers zwischen den beiden Haltern werden Gebrauchsdauer verringernde Schrumpfspannungen vermieden und die Kosten der Herstellung reduziert. Durch die Vermeidung von Schrumpfspannungen weist der Tragarm insgesamt eine sehr gute Haltbarkeit während einer langen Gebrauchsdauer auf.

Vorteilhaft für ein definiertes Verspannen des äußeren und des inneren Halters ist, den Federkörper an seinen tragenden Flächen mit einem Profil zu versehen. Durch eine gezielte Vorspannung und die Profilgestaltung können die für die Isolationsfunktion notwendigen Federraten eingestellt werden.

Ein weiterer Vorteil des erfindungsgemäßen Tragarms ist darin zu sehen, dass er durch den Federkörper als Wärmeisolator zwischen den abzustützenden Maschinenelementen wirkt. Gelangt der Tragarm beispielsweise als Motortragarm zur Anwendung und das erste Maschinenelement besteht aus der Kurbelgehäusewand einer Verbrennungskraftmaschine und das zweite Maschinenelement aus einem schwingungsdämpfenden Lager, wird die vom ersten Maschinenelement entwickelte Wärme nur in sehr geringem Maße über den Tragarm auf das zweite Maschinenelement übertragen. Speziell dann, wenn das zweite Maschinenelement ein hydraulisch dämpfendes Lager ist, ist die Wärmeisolierung von Vorteil; das hydraulisch dämpfende Lager weist dadurch, weitgehend unabhängig von der Wärmeentwicklung des ersten Maschinenelements gleichbleibend gute Gebrauchseigenschaften während einer langen Gebrauchsdauer auf. Im Hinblick auf die in zunehmendem Maße immer stärker gekapselten Motorräume ist die Wärmeisolierung von hervorzuhebendem Vorteil.

### Kurzbeschreibung der Zeichnung

Ein Ausführungsbeispiel des erfindungsgemäßen Tragarms wird nachfolgend anhand der Figuren 1 bis 3 näher erläutert. Diese zeigen jeweils in schematischer Darstellung:
- Fig. 1: eine perspektivische Darstellung des Tragarms,
- Fig. 2: einen Längsschnitt durch den Tragarm gemäß der Linie A-A aus Fig. 3 und
- Fig. 3: eine Draufsicht auf den Tragarm aus Fig. 2.

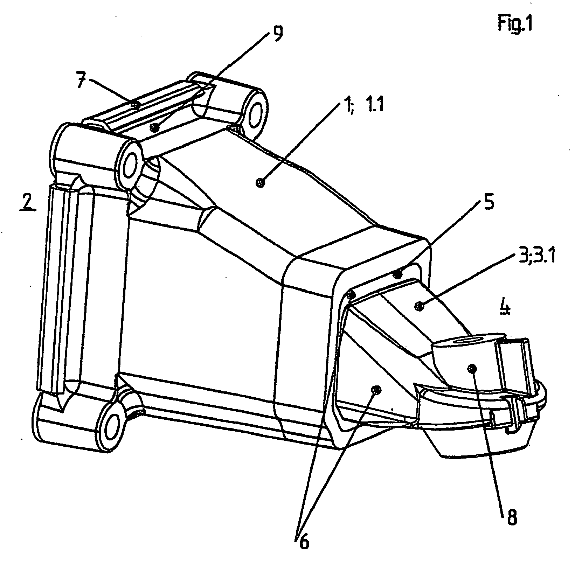

In Fig. 1 ist ein Ausführungsbeispiel eines Tragarms in perspektivischer Darstellung gezeigt. Der Tragarm wird als Motortragarm in Kraftfahrzeugen verwendet und verbindet das erste Maschinenteil 2, das durch die Kurbelgehäusewand der Verbrennungskraftmaschine gebildet ist, mit dem zweiten Maschinenelement 4, das durch ein hydraulisch dämpfendes Lager gebildet ist, wobei auf der dem zweiten Halter 3 abgewandten Seite des zweiten Maschinenelements 4 eine Befestigung am Chassis des Kraftfahrzeugs erfolgt. Der besseren Übersichtlichkeit wegen, sind das erste Maschinenelement 2 und das zweite Maschinenelement 4 nur durch die Bezugszeichen angedeutet, jedoch zeichnerisch nicht dargestellt.

Der Tragarm umfasst im Wesentlichen vier Teile, die einander ungehaftet und mit Ausnahme der Halteeinrichtung 7 zerstörungsfrei lösbar zugeordnet sind. Der erste Halter 1 ist als äußerer Halter 1.1 ausgebildet und umschließt den zweiten Halter 3, der den inneren Halter 3.1 bildet, außenumfangsseitig mit Ausnahme des Flanschs 8, an dem das zweite Maschinenelement 4 befestigbar ist. Die Verbindung der beiden Halter 1, 3 miteinander erfolgt mittels des Federkörpers 5, der aus elastomerem Werkstoff besteht, beispielsweise aus Silikonkautschuk oder Elastomerschaum. Im hier gezeigten Ausführungsbeispiel entspricht die Dicke des Federkörpers 5 etwa der Dicke des ersten und zweiten Halters 1, 3, wobei die Dicke des Federkörpers 5 bevorzugt 3 bis 6 mm beträgt. Um eine wirkungsvolle Schwingungsentkopplung zwischen dem ersten Maschinenelement 2 und dem zweiten Maschinenelement 4 zu erreichen, berühren sich der erste und zweite Halter 1, 3 an keiner Stelle unmittelbar.

Die Halteeinrichtung 7 ist durch ein Stützblech gebildet und hält die vormontierte Einheit 6, bestehend aus dem zweiten Halter 3 und dem Federkörper 5, innerhalb des ersten Halters 1.

Durch die, im Längsschnitt betrachtet, konische Gestalt zumindest einer Begrenzungswandung des zweiten Halters 3, ist dessen Montage in den ersten Halter 1 sehr einfach möglich, da sich eine Anlageberührung des auf dem zweiten Halter 3 angeordneten Federkörpers 5 mit seiner Oberfläche am ersten Halter 1 erst in der hier dargestellten Endposition ergibt. Unerwünschter abrasiver Verschleiß des Federkörpers 5 während der Montage wird dadurch sicher verhindert. Durch die Anordnung des zweiten Halters 3 und des Federkörpers 5 innerhalb des ersten Halters 1 sind diese inneren Bestandteile des Tragarms ausgezeichnet vor äußeren Einflüssen geschützt, sodass der Tragarm gleichbleibend gute Gebrauchseigenschaften während der gesamten Gebrauchsdauer aufweist.

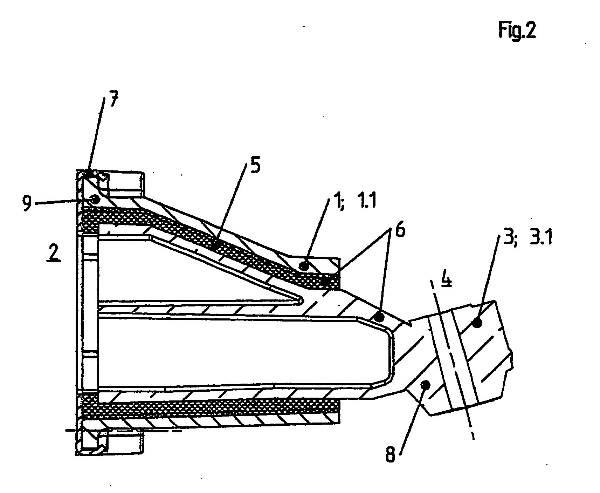

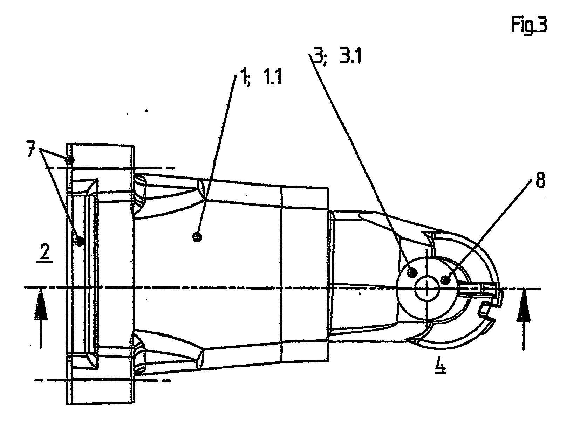

In Fig. 2 ist ein Längsschnitt entlang der Linie A-A aus Fig. 3 gezeigt. Der Federkörper 5 weist entlang seiner gesamten axialen Erstreckung eine weitgehend gleichmäßige Dicke auf, wobei der Federkörper 5 auch die dem zweiten Maschinenelement 4 abgewandte Stirnseite des zweiten Halters 3 in radialer Richtung vollständig überdeckt.

Die Befestigung der Einheit 6, bestehend aus dem zweiten Halter 3 und dem Federkörper 5, der ungebunden in Form eines Gummistrumpfs am zweiten Halter 3 festgelegt ist, erfolgt durch einen Formschluss der Halteeinrichtung 7 mit dem ersten Halter 1. Der Formschluss wird durch eine Umbördelung der Halteeinrichtung 7 hinter einem Radialflansch 9 des ersten Halters 1 erreicht.

In Fig. 3 ist eine Draufsicht auf den Tragarm aus Fig. 2 gezeigt.

Der Federkörper 5 innerhalb des Tragarms bewirkt eine Isolierung akustisch störender, hochfrequenter Schwingungen, die beispielsweise durch Antriebsketten einer Verbrennungskraftmaschine, beispielsweise zum Antrieb einer Nockenwelle, angeregt werden. Die Schwingungsisolierung erfolgt dabei in einem Frequenzbereich, der höher liegt, als der Frequenzbereich üblicher Motorlager.

Der Tragarm gelangt bevorzugt als Motortragarm zur Anwendung.

## Patentansprüche

1. Tragarm, umfassend einen ersten Halter (1), der an einem ersten Maschinenelement (2) festlegbar ist und einen zweiten Halter (3), der an einem zweiten Maschinenelement (4) festlegbar ist, wobei der erste Halter (1) und der zweite Halter (3) mittels eines Federkörpers (5) aus elastomerem Werkstoff elastisch nachgiebig miteinander verbunden sind, wobei der erste Halter (1) als äußerer (1.1) und der zweite Halter (3) als innerer Halter (3.1) ausgebildet sind und wobei der äußere Halter (1.1) den inneren Halter (3.1) teilweise umschließt, **dadurch gekennzeichnet, dass** der zweite Halter (3) und der Federkörper (5) eine vormontierbare Einheit (6) bilden, die mittels einer Haltereinrichtung (7) mit dem ersten Halter (1) verbunden ist, dass der äußere Halter (1.1) und der innere Halter (3.1) im Wesentlichen vollständig kongruent gestaltet und ineinander einsteckbar sind, so dass der Tragarm zweischalig ausgebildet ist und dass der äußere Halter (1.1) und der innere Halter (3.1) kegelstumpf- oder pyramidenstumpfförmig ausgebildet sind.

2. Tragarm nach Anspruch 1, **dadurch gekennzeichnet, dass** der Federkörper (5) als Gummistrumpf ausgebildet ist.

3. Tragarm nach einem der Ansprüche 1 oder 2, **dadurch gekennzeichnet, dass** der Federkörper (5) ungebunden zwischen dem ersten (1) und dem zweiten Halter (3) angeordnet ist.

4. Tragarm nach einem der Ansprüche 1 bis 3, **dadurch gekennzeichnet, dass** der Federkörper (5) zum Abstimmen der Federraten ein elastisch verformbares Oberflächenprofil aufweist.

## Claims

1. Carrying arm, comprising a first holder (1), which can be secured to a first machine .element (2), and a second holder (3), which can be secured to a second machine element (4), the first holder (1) and the second holder (3) being connected to one another in an elastically resilient manner by means of a spring body (5) consisting of elastomeric material, the first holder (1) being designed as an outer holder (1.1) and the second holder (3) as an inner holder (3.1), and the outer holder (1.1) partially surrounding the inner holder (3.1), **characterized in that** the second holder (3) and the spring body (5) form a premountable unit (6) which is connected to the first holder (1) by means of a holder device (7), **in that** the outer holder (1.1) and the inner holder (3.1) are of essentially completely congruent configuration and can be plugged one into the other, so that the carrying arm is of two-shell design, and **in that** the outer holder (1.1) and the inner holder (3.1) are designed in the form of a truncated cone or truncated pyramid.

2. Carrying arm according to Claim 1, **characterized in that** the spring body (5) is designed as a rubber stocking.

3. Carrying arm according to either one of Claims 1 and 2, **characterized in that** the spring body (5) is arranged, untied, between the first holder (1) and the second holder (3).

4. Carrying arm according to one of Claims 1 to 3, **characterized in that** the spring body (5) has an elastically deformable surface profile for the adjustment of the spring constants.

## Revendications

1. Bras de support, comprenant un premier support (1), qui peut être fixé à un premier élément de machine (2), et un deuxième support (3), qui peut être fixé à un deuxième élément de machine (4), dans lequel le premier support (1) et le deuxième support (3) sont reliés l'un à l'autre d'une façon déformable élastiquement au moyen d'un corps élastique (5) en une matière élastomère, dans lequel le premier support (1) est réalisé comme support extérieur (1.1) et le deuxième support (3) comme support intérieur (3.1), et dans lequel le support extérieur (1.1) entoure partiellement le support intérieur (3.1), **caractérisé en ce que** le deuxième support (3) et le corps élastique (5) forment une unité (6) pouvant être préassemblée, qui est assemblée au premier support (1) au moyen d'un dispositif de support (7), **en ce que** le support extérieur (1.1) et le support intérieur (3.1) sont réalisés avec une forme sensiblement totalement congruente et peuvent s'engager l'un dans l'autre, de telle manière que le bras de support soit réalisé en deux coques, et **en ce que** le support extérieur (1.1) et le support intérieur (3.1) sont réalisés en forme de tronc de cône ou de tronc de pyramide.

2. Bras de support selon la revendication 1, **caractérisé en ce que** le corps élastique (5) est constitué par une housse en caoutchouc.

3. Bras de support selon l'une quelconque des revendications 1 ou 2, **caractérisé en ce que** le corps élastique (5) est disposé sans liaison entre le premier support (1) et le deuxième support (3).

4. Bras de support selon l'une quelconque des revendications 1 à 3, **caractérisé en ce que** le corps élastique (5) présente un profil de surface élastiquement déformable pour accorder le taux d'élasticité.
